# EUROPEAN PATENT SPECIFICATION

(11) **EP 3 192 701 B1**
(45) Date of publication and mention of the grant of the patent: **26.09.2018**
(21) Application number: 16150935.1
(22) Date of filing: 12.01.2016
(51) Int. Cl.: B60R 7/04, B60N 3/10

(54) **RECEPTION APPARATUS FOR A VEHICLE**
AUFNAHMEVORRICHTUNG FÜR EIN FAHRZEUG
APPAREIL DE RÉCEPTION POUR UN VÉHICULE

(43) Date of publication of application: 19.07.2017
(73) Proprietor: Lisa Dräxlmaier GmbH, 84137 Vilsbiburg (DE)
(72) Inventor: Giday, Akos, 1181 Budapest (HU); Zoltán, Micsonai, 1118 Budapest (HU)

(56) References cited:
- WO-A1-2007/095731
- DE-A1-102011 078 162
- US-A1- 2011 049 157

## Description

The invention relates to a reception apparatus for a vehicle, comprising a top cover having an opening, a lid slidable between a close position and an open position, a receptacle, and a moving mechanism connecting the lid and the receptacle such that the receptacle is movable by sliding the lid. The invention also relates to a method for providing a receptacle, the method comprising sliding a lid from a close position in which it covers an opening of a top cover to an open position in which the lid exposes a receptacle positioned below the opening. The invention is particularly useful for passenger cars, in particular for center consoles, in particular for receptacles in form of cup holders or ash trays etc.

WO 2007/095731 A1 discloses a center console of a car with a cup holder. The cup holder is closed by a lid. The cup holder is vertically adjustable between a first position and a second position. With the lid closed, the cup holder is in the first position. When opening the lid, the cup holders can be lifted to the second position. Also, an intermediate position between the first position and the second position is possible. The adjustment of the height of the cup holder is via a motor.

DE 11 2006 000 795 T5 discloses another apparatus for lifting a cup holder. After opening a lid, touching a sensor causes the cup holder to be lifted upwards out of the center console of a car.

Disadvantageously, the cup holders of the prior art documents create sharp edges if they are in their lifted-up position. Such sharp edges may negatively influence a passenger safety in case of a crash of the car, e.g. during a head impact.

It is the **object** of the present invention to at least partially overcome the disadvantages of the prior art. It is a particular object to provide a reception apparatus for use in a vehicle which enables an improved passenger safety.

The object is achieved by the subject-matter of the independent claims. Advantageous embodiments can, e.g., be derived from the dependent claims and/or the specification.

The object is achieved by a reception apparatus for a vehicle, comprising a top cover having an opening, a lid slidable between a first ("close") position and an second ("open") position, a receptacle, and a ("moving") mechanism connecting the lid and the receptacle such that the receptacle is movable by sliding the lid, wherein, in a first ("close") configuration, the receptacle is retracted below the opening and the lid is in its close position covering the opening above the receptacle, and wherein, in a second ("open") configuration, the opening is uncovered by the lid being in its open position and the receptacle is lifted up towards the top cover such that it is positioned flush with an outer surface of the top cover.

This reception apparatus has the advantage that there are no steps and thus no sharp edges at the transition between the receptacle and the top cover when the receptacle is in its lifted-up position for use by a user (e.g., a passenger). This improves passenger safety, e.g. in case of a crash. Also, such an arrangement enables a particularly high-quality visual and haptic impression. The flush position of the receptacle can be achieved by a simple sliding motion of the lid.

The vehicle can be a land-based vehicle (e.g. a passenger car, a bus etc.), an aircraft (airplane, helicopter etc.) or a ship.

In particular, the moving mechanism links the lid with the receptacle. The moving mechanism may transform a sliding motion of the lid into a lifting motion of the receptacle.

In the close configuration (which may also be called a 'start' configuration), the lid covers the receptacle.

In the open configuration (which may also be called an 'end' configuration), the lid does not cover receptacle. In the open configuration, the opening of the top cover is uncovered by the lid at least as far as the receptacle is concerned; other areas of the opening may still be covered by the lid.

A lifted-up receptacle may also be called a raised receptacle while a retracted receptacle may also be called a lowered receptacle.

It is an embodiment that the lid is slidable over its open position into an overextended position, wherein the moving mechanism is arranged such that the receptacle is only lifted up when sliding the lid from the open position towards the overextended position. This allows a particularly compact and shallow design. The receptacle is thus only lifted when it is not covered by the lid. The overextended position may be a stop position or end position for the lid.

It is another embodiment that, after having reached the overextended position, the lid is slidable back to its open position where the receptacle provides a stop for the lid. Thus a secure open position of the lid and a secure open configuration are achieved using only few parts since the receptacle has the additional function to act as the stop.

It is another embodiment that the moving mechanism comprises at least one sliding key. The sliding key comprises at least one cut in its upper side that has a ramp. The receptacle comprises at least one tooth fitting into a respective cut of the sliding key. This gives the advantage of having a robust, compact and light-weight moving mechanism. The moving mechanism is a lifting mechanism in which the (e.g. mostly horizontal) sliding motion of the lid is transformed into a perpendicular (e.g. mostly vertical) lifting motion. The lifting distance can be set in a precise manner. The moving mechanism may also comprise a guide region of the housing.

The sliding key may have a ribbon-like form wherein one of its long sides is its upper side. The ramp may be inclined towards a forward direction (coinciding with a direction of the lid sliding into its close position). Thus a point on the ramp is positioned further in the forward direction if its distance from a ground of the cut is higher. Therefore, if the sliding key slides in a rearward direction, the receptacle is forced upwards by its gliding on the ramp.

The upper side of the sliding key may have more than one cut to enable a particularly even lifting motion. The upper side of the sliding key may be a serrated side. A fitting tooth of the receptacle enables a smooth gliding motion. The at least one tooth may be facing downward.

It is another embodiment that the sliding key comprises a first protrusion and the lid comprises a second protrusion such that the first protrusion is engaged by the second protrusion if the lid is positioned between its open position and its overextended position. This gives a robust and easily implementable mechanical link between the lid and the sliding key. In the close position, the protrusions are distanced from each other, preferably by a distance that coincides with a sliding distance of the lid between its close position and its open position. With or after having reached the open position, the two protrusions contact each other. When the lid slides further towards the overextended position, the second protrusion pushes the first protrusion in the same direction, thus sliding the sliding key, and therefore lifting the receptacle.

It is another embodiment that the reception apparatus comprises a catch mechanism to catch the sliding key when the receptacle has been lifted flush with the outer surface of the top cover. This gives the advantage that the sliding key cannot be brought into its close position (i.e. its position if the reception apparatus is in its close configuration) without actively releasing the catch mechanism. This, in turn, allows a particularly secure stay or continuance of the lid and the receptacle in the open position (i.e. its position if the reception apparatus is in its open configuration). The catch mechanism may comprise a locking hook or snap-in nose at the sliding key and a respective recess at another - in particular static - part of the reception apparatus, or vice versa. The catch mechanism may be activated by an actor to release the sliding key. The actor may be a mechanical actor, an electromechanical actor (e.g. comprising a motor) etc.

It is another embodiment that the reception apparatus comprises at least one of the following springs: at least one first spring to push or pull the lid in the direction of the closed position; at least one second spring to push or pull the receptacle downwards; at least one third spring to push or pull the sliding key in the direction of its close position. This enables a robust and compact way to automatically bring the reception apparatus from its open configuration into its close configuration.

It is another embodiment that the reception apparatus comprises a release mechanism that, if activated in the open configuration, causes the catch mechanism to be released. This may release the moving mechanism (e.g. by releasing the sliding keys) which, in turn, causes the receptacle to move downward and the lid to move into its close position. Such a release mechanism is easy to implement and allows an automatic transition from the open configuration to the close configuration of the reception apparatus. The release mechanism may be activated by a passenger (e.g. by pushing a button) or by the vehicle. The return to the close configuration may be driven by the elastic energy stored in the spring(s).

It is another embodiment that the lid is flush with the outer surface of the top cover. This avoids sharp edges also in the close position of the lid.

It is another embodiment that the lid, the at least one sliding key and the receptacle are held by a common housing. This achieves a particularly easy assembly, compact dimensions and robust design of the reception apparatus.

It is another embodiment that the reception apparatus is part of a center console of a vehicle.

It is another embodiment that the receptacle is a cup holder or an ash tray.

The object is also achieved by a method for providing a receptacle which is connected by a moving mechanism with a lid that is slidable between a close position and an open position, such that the receptacle is moveable by sliding the lid, wherein in a close configuration, the receptacle is retracted below an opening and the lid is in its close position covering the opening above the receptacle, the method comprising: sliding a lid from a close position in which it covers an opening of a top cover to an open position in which the lid exposes a receptacle positioned below the opening; sliding the lid over the open position to an overextended position whereas the receptacle is lifted into the opening such that it is positioned flush with an outer surface of the top cover; and sliding the lid back to the open position where the receptacle acts as a stop for the lid. This method achieves the same advantages as the reception apparatus described above and may be embodied in analogy to the reception apparatus.

For example, in one embodiment, upon activating a release mechanism, the sliding key is released, the receptacle is moved downward and the lid is moved into its close position, e.g. by respective springs.

At least some features and advantages as described above are now described in more detail based on a schematic description of a particular embodiment.
Fig.1 shows a cut-out of parts of a center console comprising a reception apparatus being in a close configuration;
Fig.2 shows a cross-sectional back view of the center console;
Fig.3 shows a cross-sectional side view of the center console with the reception apparatus being in the close configuration;
Fig.4 shows another cross-sectional side view of the center console with the reception apparatus being in the close configuration;
Fig.5 shows a view similar to Fig.1 with the reception apparatus being in an intermediate configuration;
Fig.6 shows a view similar to Fig.1 with the reception apparatus being in an overextended configuration;
Fig.7 shows the components of Fig.1 with the reception apparatus being in an open configuration;
Fig.8 shows a view similar to Fig.3 with the reception apparatus being in the open configuration; and
Fig.9 shows a view similar to Fig.4 with the reception apparatus being in the open configuration.

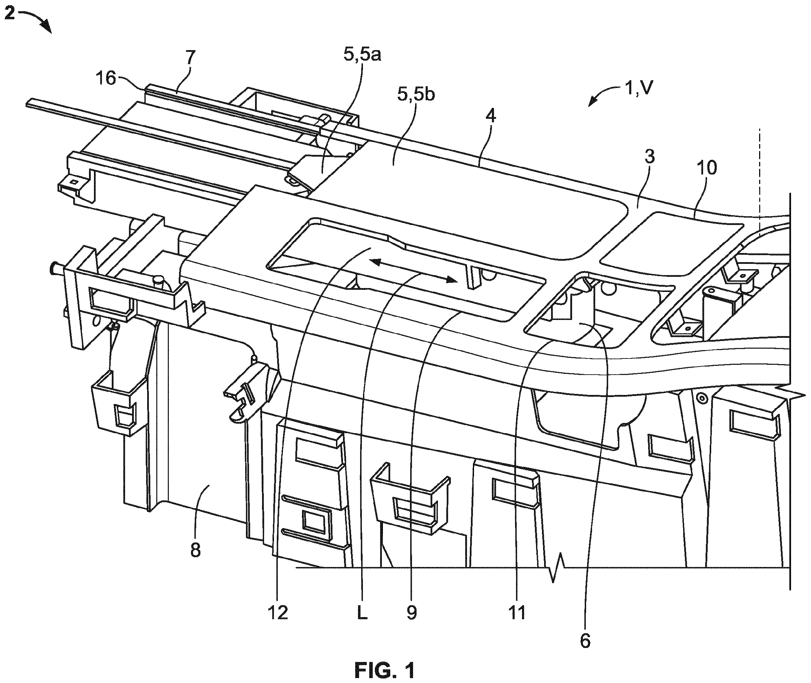

**Fig.1** shows a cut-out of parts of a center console 1 of a passenger vehicle V comprising a reception apparatus 2. The reception apparatus 2 is in a 'close' configuration. The reception apparatus 2 comprises a top cover 3 having an opening 4, a slidable lid 5, and a receptacle in form of a cup holder 6. The lid 5 comprises a lid support 5a and a veneer panel 5b on top of the lid support 5a. Such a lid 5 may also be called a veneer lid. The lid support 5a may be guided by a housing 7 of the reception apparatus 2. The lid 5 is flush with the top cover 3, i.e., an outer surface of the veneer panel 5b of the lid 5 has a stepless transition to the outer surface of the surrounding area of the top cover 3.

The top cover 3 may cover an open upper side of a console housing 8. The console 2 may have additional openings 9, 10, and 11.

In the close configuration, the cup holder 6 is retracted below the opening 4 and the lid 5 is in its close position at least covering the opening 4 above the cup holder 6. The cup holder 6 is realized as an insert to be inserted into the housing 7.

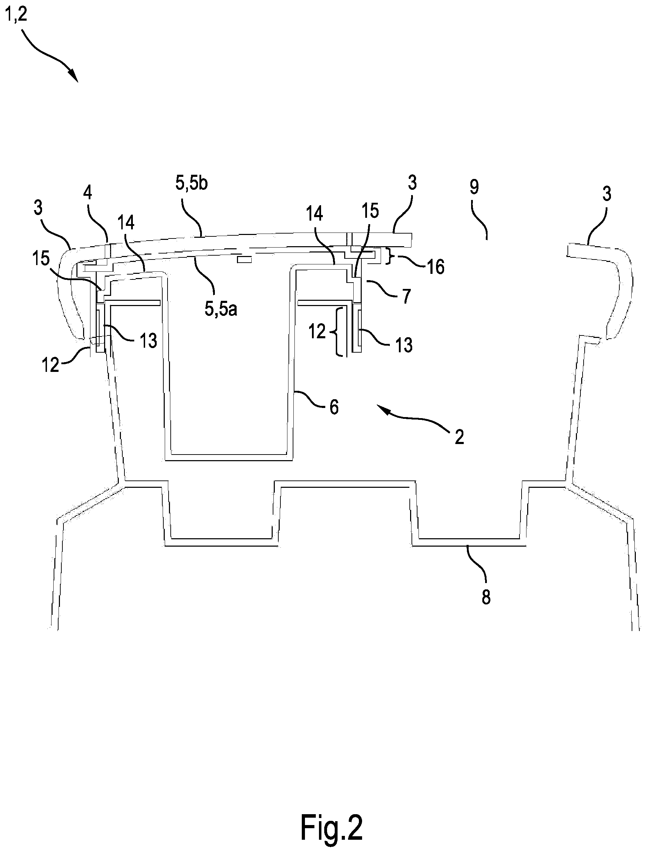

**Fig.2** shows a cross-sectional back view of the center console 1 with the respective, vertically aligned sectional plane crossing the cup holder 6. At its two longitudinal sides, the housing 7 comprises respective guide regions 12 to accommodate respective sliding keys 13. The sliding keys 13 can slide along a longitudinal direction L, as shown in Fig.1, i.e. in a forward direction (to the right in Fig.1) and in a rearward direction (to the left in Fig.1).

The cup holder 6 rests on the sliding keys 13. The cup holder 6 is guided by the housing 7 in a vertical direction. To this effect, the cup holder 6 has two upper flange regions 14 at its longitudinal sides. The free edges of the flange regions 14 rest on an upper side of a respective sliding key 13. The flange regions 14 also show a respective upward facing step 15.

The housing 7 also comprises guide regions 16 to accommodate respective side regions of the lid support 5a. The lid support 5a and thus the lid 5 as a whole can therefore slide along the longitudinal direction L.

Thus, the lid 5, the sliding keys 13 and the cup holder 6 are held and guided by the common housing 7.

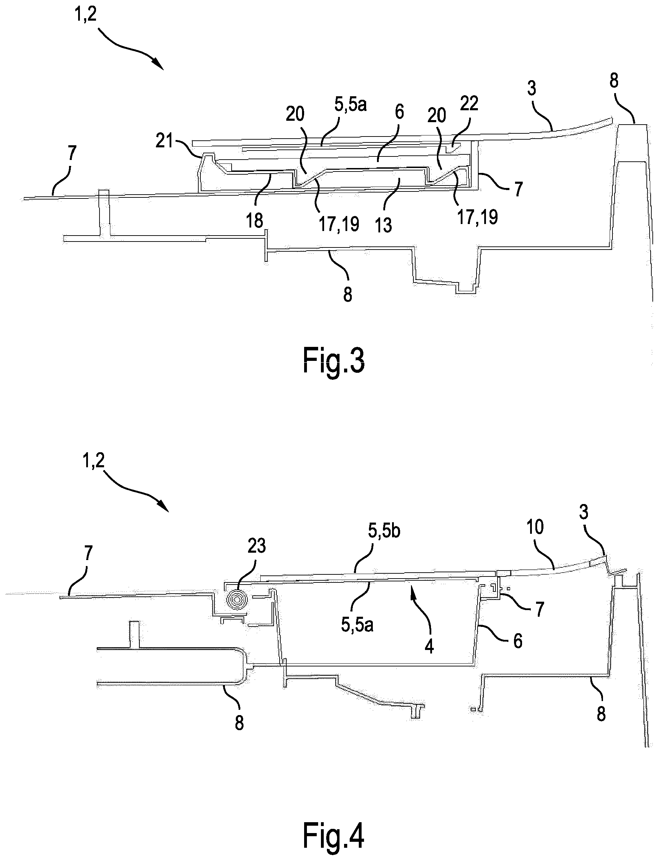

**Fig.3** shows a cross-sectional side view of the center console 1 with the reception apparatus 2 being in the close configuration. The respective sectional plane lies in the longitudinal direction L outside the opening 4 and goes through one of the sliding keys 13. Thus, the veneer panel 5b is not shown.

The sliding key 13 each have a linear, ribbon-like form which comprises two cuts 17 in its upper side 18. Each cut 17 has a ramp 19 that is inclined in a forward direction. Thus, a point on the ramp 19 that is positioned further in the forward direction has a larger vertical distance from a ground of the cut 17. The other side of each cut 17 is basically vertical and can act as a stop.

The flange region 14 of the cup holder 6 comprises two teeth 20 fitting into a respective cut 17 of the respective sliding key 13. The teeth 20 are formed at the free edges of the flange regions 14 and are facing downward.

Also, the sliding keys 13 each have an upward-looking first protrusion 21 at a rearward end. The first protrusion 21 is located rearward of or behind the cup holder 6. The lid support 5a comprises a downward-looking second protrusion 22 at its forward end. A distance between the two protrusions 21, 22 in the longitudinal direction is equal or greater than a respective length of the cup holder 6. Therefore, if a sliding key 13 slides in the rearward direction, the cup holder 6 is forced upwards by gliding on the ramp 19. The housing 7 and the sliding keys 13 may be regarded as a moving mechanism or link mechanism connecting the lid 5 and the cup holder 6 such that the cup holder 6 is lifted up and/or retracted by sliding the lid 5.

**Fig.4** shows another cross-sectional side view of the center console 1 with the reception apparatus 2 being in the close configuration. The respective vertical sectional plane crosses the opening 4 in the longitudinal direction L.

A clock spring 23 is provided in the housing 7 to push or pull the lid 5 back into its close position. The reception apparatus 2 may also comprise at least one spring, e.g. coil spring, (not shown) to push or pull the sliding keys 13 in a forward direction. The reception apparatus 2 may further comprise at least one spring (not shown) to push or pull the cup holder 6 downward against the sliding keys 13.

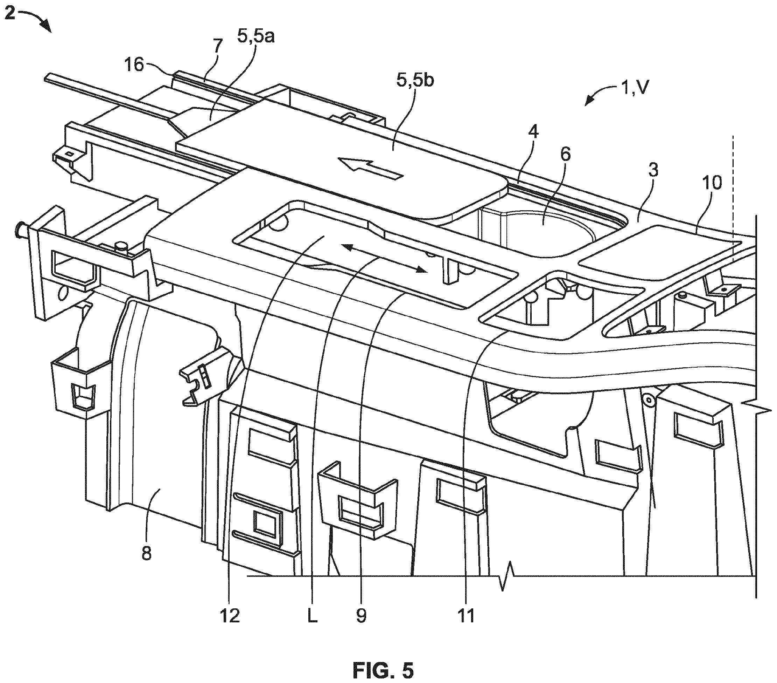

**Fig.5** shows the components of Fig.1 with the reception apparatus 2 being in a third ("intermediate") configuration. In this configuration, the lid 5 has been slid rearwards from its close position towards an open position (as indicated by the arrow). The cup holder 6 is now partly exposed. The lid 5 can be slid rearwards manually or by activating a motor (not shown) etc.

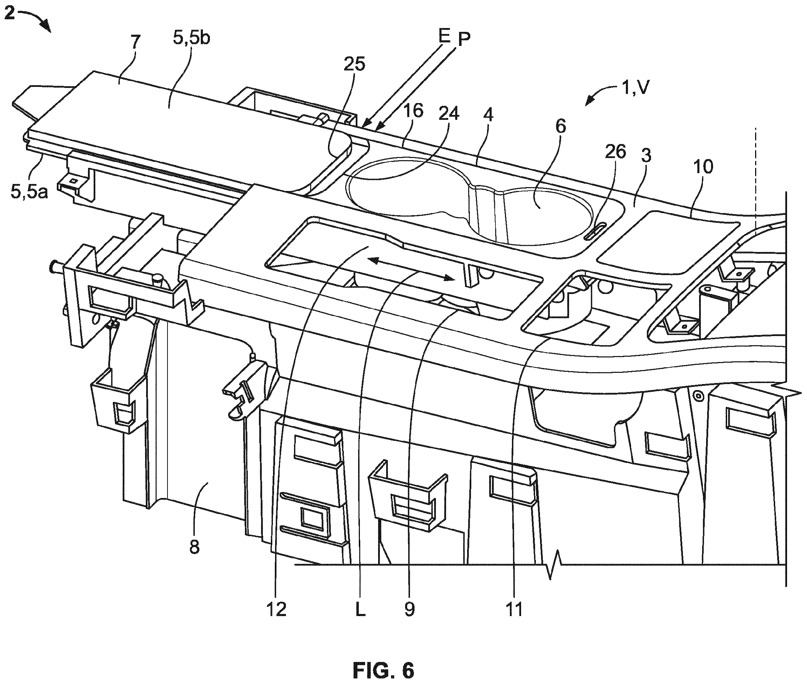

**Fig.6** shows the components of Fig.1 with the reception apparatus 2 being in an overextended configuration wherein the lid 5 has been moved over its open position P into an overextended position E. A longitudinal distance between these positions P and E may, e.g., be between 12 mm and 20 mm, in particular 16 mm.

With reaching the open position P or shortly after, the protrusions 22 of the lid 5 come into contact with the protrusions 21 of the sliding keys 13. By sliding the lid 5 further towards its overextended position E, the protrusions 22 push the protrusions 21 and thus the sliding keys 13 in a rearward direction. This raises or lifts the cup holder 6. When the lid 5 has reached its overextended position E, the cup holder 6 is lifted into the opening 4 and its upper surface is flush with the upper surface of the top cover 3. Therefore, a transition between the cup holder 6 and the top cover 3 does not show any steps or sharp edges. A height difference the lifted position and the retracted position may be, e.g., between 12 mm and 16 mm, in particular 14 mm. To help the cup holder 6 being precisely flush with the top cover 6, the top cover 6 may act as a mechanical stop for the steps 15 of the flange regions 14 of the cup holder 6.

Thus, the use of the sliding keys 13 and the long distance between the protrusions 21 and 22 in the closed configuration allow the cup holder 6 to be lifted up only when the lid 5 has slid from its open position towards its overextended position and thus fully exposes the cup holder 6 (or at least a part of the cup holder 6 that is to be inserted into the opening 4).

In the overextended position, a catch mechanism (not shown) catches the sliding keys 13, i.e., when the cup holder 6 has been lifted flush with the outer surface of the top cover 3. This prevents the sliding keys 13 to slide back in the forward direction.

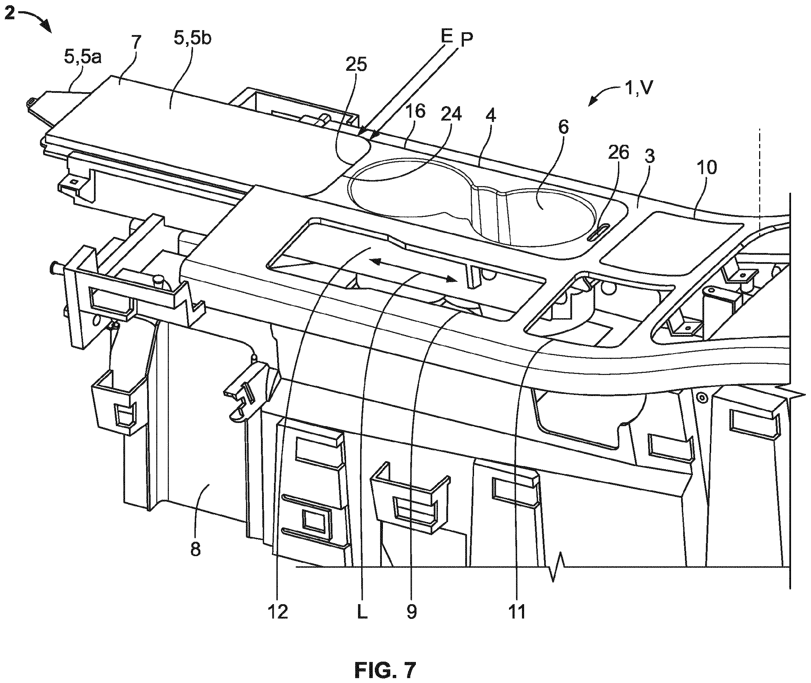

**Fig.7** shows the reception apparatus 2 being in an open configuration. In the open configuration, the lid 5 has been slid back from the overextended position in the forward direction until it contacts a rearward edge 24 or rim of the lifted-up or raised cup holder 6. The cup holder 6 thus acts as a stop for the lid 5. The lid 5 is securely pressed against the cup holder 6. The upper surface of the top cover 3, the cup holder 6 and the lid 5 are all flush regarding each other. Transitions between these components do not show any steps, large gaps or sharp edges. To this effect, the forms of the rearward edge 24 of the cup holder 6 and of a forward edge 25 of the lid 5 are complementarily shaped.

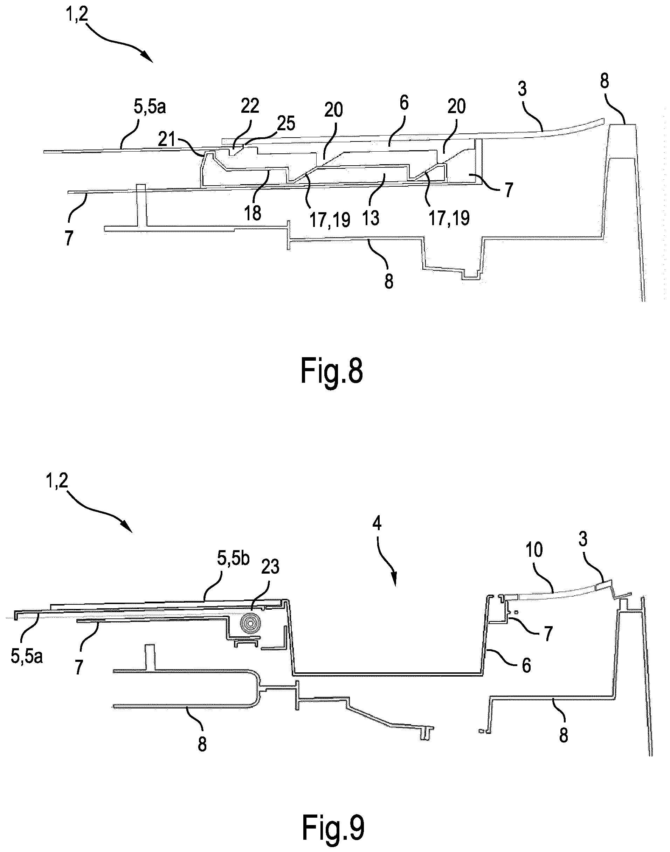

**Fig.8** shows a cross-sectional side view of the center console 1 with the reception apparatus 2 being in the open configuration.

**Fig.9** shows another cross-sectional side view of the center console 2 with the reception apparatus 2 being in the open configuration. In the open configuration, coming from the overextended position, the lid 5 has slid in the forward direction to contact the rearward edge 24 of the cup holder 6.

The sliding keys 13 are held back in a position corresponding to the overextended position or configuration by the catch mechanism (not shown). Therefore, the teeth 20 of the cup holder 6 rest on the upper side 18 of the respective sliding key 13, namely outside the cuts 17. The protrusions 21 and 22 are not in contact anymore. The catch mechanism ensures that the sliding keys 13 cannot slide forward.

The reception apparatus 2 also comprises a release mechanism (not shown) that, if activated in the open configuration, causes the catch mechanism to release the sliding keys 13 which would then be pushed or pulled forward. This forward slide of the sliding keys 13 causes the teeth 20 to again get in mesh with the cuts 17 and thus the cup holder 6 to be lowered. That, in turn, would enable the lid 5 to slide in a forward direction towards its close position, namely forced by the clock spring 23. Therefore, by activating the release mechanism, the reception apparatus 2 can be brought automatically from the open configuration into the close configuration. To activate the release mechanism, a user may push a respective button 26 (see Fig.7). The catch mechanism and the release mechanism may be one mechanism or may be two separate mechanisms.

Of course, the invention is not restricted to the shown embodiment.

### List of Reference Signs

- 1: center console
- 2: reception apparatus
- 3: top cover
- 4: opening
- 5: lid
- 5a: lid support
- 5b: veneer panel
- 6: cup holder
- 7: housing
- 8: console housing
- 9: opening
- 10: opening
- 11: opening
- 12: guide region
- 13: sliding key
- 14: flange region
- 15: step
- 16: guide region
- 17: cut
- 18: upper side of a sliding key
- 19: ramp
- 20: tooth
- 21: first protrusion
- 22: second protrusion
- 23: clock spring
- 24: rearward edge of the cup holder
- 25: forward edge of the lid
- 26: button
- E: overextended position of the lid
- L: longitudinal direction
- P: open position of the lid
- V: vehicle

## Claims

1. A reception apparatus (2) for a vehicle (V), comprising
- a top cover (3) having an opening (4),
- a lid (5) slidable between a close position and an open position (P),
- a receptacle (6), and
- a moving mechanism (7, 13) connecting the lid (5) and the receptacle (6) such that the receptacle (6) is movable by sliding the lid (5),
wherein,
- in a close configuration, the receptacle (6) is retracted below the opening (4) and the lid (5) is in its close position covering the opening (4) above the receptacle (6), and wherein,
**characterized in that**
- in an open configuration, the opening (4) is uncovered by the lid (5) being in its open position (P) and the receptacle (6) is lifted up towards the top cover (3) such that it is positioned flush with an outer surface of the top cover (3).

2. The reception apparatus (2) according to claim 1, wherein the lid (5) is slidable over its open position (P) into an overextended position (E) and wherein the moving mechanism (7, 13) is arranged such that the receptacle (6) is only lifted up when sliding the lid (5) from the open position (P) towards the overextended position (E).

3. The reception apparatus (2) according to claim 2, wherein, after having reached the overextended position, the lid (5) is slidable back to its open position (P) where the receptacle (6) provides a stop for the lid.

4. The reception apparatus (2) according to claim 3, wherein
- the moving mechanism (7, 13) comprises at least one sliding key (13), which sliding key (13) comprises at least one cut (17) in its upper side (18) that has a ramp (19) and which comprises a first protrusion (21),
- the receptacle (6) comprises at least one tooth (20) fitting into a respective cut (17) of the least one sliding key (13), and
- the lid (5) comprises a second protrusion (22) such that the first protrusion (21) is engaged by the second protrusion (22) if the lid (5) is positioned between its open position (P) and its overextended position (E).

5. The reception apparatus (2) according to claim 4, comprising a catch mechanism to catch the at least one sliding key (13) when the receptacle (6) has been lifted flush with the outer surface of the top cover (3).

6. The reception apparatus (2) according to claim 5, wherein the reception apparatus (2) comprises at least one of the following springs:
- at least one first spring (23) to push or pull the lid (5) in the direction of the closed position;
- at least one second spring to push or pull the receptacle (6) downwards; and
- at least one third spring to push or pull the at least one sliding key (13) in the direction of its close position.

7. The reception apparatus (2) according to any of the claims 5 to 6, wherein the reception apparatus (2) comprises a release mechanism that, if activated in the open configuration, causes the catch mechanism to be released, the receptacle (6) to move downward and the lid (5) to move into its close position.

8. The reception apparatus (2) according to any of the preceding claims, wherein the lid (5) is flush with the outer surface of the top cover (3).

9. The reception apparatus (2) according to any of the preceding claims, wherein the lid (5), the at least one sliding key (13) and the receptacle (6) are held by a common housing (7).

10. The reception apparatus (2) according to any of the preceding claims, wherein the reception apparatus (2) is part of a center console of a vehicle.

11. The reception apparatus (2) according to any of the preceding claims, wherein the receptacle (6) is a cup holder or an ash tray.

12. A method for providing a receptacle (6) which is connected by a moving mechanism (7, 13) with a lid (5) that is slidable between a close position and an open position (P), such that the receptacle (6) is moveable by sliding the lid (5), wherein in a close configuration, the receptacle (6) is retracted below an opening (4) and the lid (5) is in its close position covering the opening (4) above the receptacle (6), wherein the method is **characterized by**:
- sliding a lid (5) from a close position in which it covers an opening (4) of a top cover (3) to an open position (P) in which the lid (5) exposes a receptacle (6) positioned below the opening,
- sliding the lid (5) over the open position (P) to an overextended position (E) whereas the receptacle (6) is lifted into the opening (4) such that it is positioned flush with an outer surface of the top cover (3), and
- sliding the lid (5) back to the open position (P) where the receptacle (6) acts as a stop for the lid (5).

13. The method according to claim 12, wherein, upon activating a release mechanism, the sliding key (13) is released, the receptacle (6) is moved downward, and the lid (5) is moved into its close position.

## Patentansprüche

1. Aufnahmeeinrichtung (2) für ein Fahrzeug (V), umfassend
- eine Oberschale (3) mit einer Öffnung (4),
- einen Deckel (5), der zwischen einer geschlossenen Position und einer offenen Position (P) verschoben werden kann,
- einen Behälter (6), und
- einen Bewegungsmechanismus (7, 13), der den Deckel (5) und den Behälter (6) derart verbindet, dass der Behälter (6) durch das Schieben des Deckels (5) bewegt werden kann,
wobei
- in einer geschlossenen Einstellung der Behälter (6) unter die Öffnung (4) zurückgezogen wird und der Deckel (5) sich in seiner geschlossenen Position befindet, die Öffnung (4) über dem Behälter (6) abdeckend, und wobei
**gekennzeichnet dadurch, dass**
- in einer offenen Einstellung die Öffnung (4) nicht von dem Deckel (5), der sich in seiner offenen Position (P) befindet, abgedeckt wird und der Behälter (6) derart zu der Oberschale (3) hin hochgezogen wird, dass er bündig mit einer Außenfläche der Oberschale (3) ist.

2. Aufnahmeeinrichtung (2) nach Anspruch 1, wobei der Deckel (5) über seine offene Position (P) in eine überstreckte Position (E) geschoben werden kann und wobei der Bewegungsmechanismus (7, 13) derart ausgelegt ist, dass der Behälter (6) nur hochgezogen wird, wenn der Deckel (5) von der offenen Position (P) zu der überstreckten Position (E) geschoben wird.

3. Aufnahmeeinrichtung (2) nach Anspruch 2, wobei der Deckel (5), nachdem er die überstreckte Position erreicht hat, zurück in seine offene Position (P) geschoben werden kann, wo der Behälter (6) einen Anschlag für den Deckel bereitstellt.

4. Aufnahmeeinrichtung (2) nach Anspruch 3, wobei
- der Bewegungsmechanismus (7, 13) mindestens eine Gleitfeder (13) umfasst, wobei die Gleitfeder (13) mindestens eine Senkung (17) in ihrer oberen Seite (18) umfasst, die eine Schräge (19) umfasst, und die einen ersten Vorsprung (21) umfasst,
- der Behälter (6) mindestens einen Zahn (20) umfasst, der in eine jeweilige Senkung (17) der mindestens einen Gleitfeder (13) passt, und
- der Deckel (5) einen zweiten Vorsprung (22) umfasst, derart, dass der erste Vorsprung (21) mit dem zweiten Vorsprung (22) in Eingriff kommt, wenn der Deckel (5) zwischen seiner offenen Position (P) und seiner überstreckten Position (E) positioniert ist.

5. Aufnahmeeinrichtung (2) nach Anspruch 4, umfassend einen Fangmechanismus, um die mindestens eine Gleitfeder (13) zu fangen, wenn der Behälter (6) bündig mit der Außenfläche der Oberschale (3) hochgezogen worden ist.

6. Aufnahmeeinrichtung (2) nach Anspruch 5, wobei die Aufnahmeeinrichtung (2) mindestens eine der folgenden Federn umfasst:
- mindestens eine erste Feder (23), um den Deckel (5) in die Richtung der geschlossenen Position zu drücken oder ziehen;
- mindestens eine zweite Feder, um den Behälter (6) nach unten zu drücken oder ziehen; und
- mindestens eine dritte Feder, um die mindestens eine Gleitfeder (13) in die Richtung ihrer geschlossenen Position zu drücken oder ziehen.

7. Aufnahmeeinrichtung (2) nach einem der Ansprüche 5 bis 6, wobei die Aufnahmeeinrichtung (2) einen Freigabemechanismus umfasst, der, wenn er in der offenen Einstellung aktiviert ist, den Fangmechanismus dazu veranlasst, sich zu lösen, den Behälter (6), sich nach unten zu bewegen, und den Deckel (5), sich in seine geschlossene Position zu bewegen.

8. Aufnahmeeinrichtung (2) nach einem der vorhergehenden Ansprüche, wobei der Deckel (5) bündig mit der Außenfläche der Oberschale (3) ist.

9. Aufnahmeeinrichtung (2) nach einem der vorhergehenden Ansprüche, wobei der Deckel (5), die mindestens eine Gleitfeder (13) und der Behälter (6) in einem gemeinsamen Gehäuse (7) enthalten sind.

10. Aufnahmeeinrichtung (2) nach einem der vorhergehenden Ansprüche, wobei die Aufnahmeeinrichtung (2) Teil einer Mittelkonsole eines Fahrzeugs ist.

11. Aufnahmeeinrichtung (2) nach einem der vorhergehenden Ansprüche, wobei der Behälter (6) ein Becherhalter oder ein Aschenbecher ist.

12. Verfahren zum Bereitstellen eines Behälters (6), der durch einen Bewegungsmechanismus (7, 13) verbunden ist mit einem Deckel (5), der zwischen einer geschlossenen Position und einer offenen Position (P) verschoben werden kann, derart, dass der Behälter (6) durch Schieben des Deckels (5) bewegt werden kann, wobei in einer geschlossenen Einstellung der Behälter (6) unterhalb einer Öffnung (4) zurückgezogen ist und der Deckel (5) sich in seiner geschlossenen Position befindet, die Öffnung (4) über dem Behälter (6) abdeckend, wobei das Verfahren **gekennzeichnet ist durch**:
- Schieben eines Deckels (5) von einer geschlossenen Position, in der er eine Öffnung (4) einer Oberschale (3) abdeckt, in eine offene Position (P), in der der Deckel (5) einen Behälter (6), der unterhalb der Öffnung positioniert ist, freilegt,
- Schieben des Deckels (5) über die offene Position (P) in eine überstreckte Position (E), während der Behälter (6) derart in die Öffnung (4) hochgezogen wird, dass er bündig mit einer Außenfläche der Oberschale (3) positioniert wird, und
- Schieben des Deckels (5) zurück in die offene Position (P), wo der Behälter (6) als ein Anschlag für den Deckel (5) fungiert.

13. Verfahren nach Anspruch 12, wobei beim Aktivieren eines Freigabemechanismus die Gleitfeder (13) gelöst wird, der Behälter (6) nach unten bewegt wird und der Deckel (5) in seine geschlossene Position bewegt wird.

## Revendications

1. Appareil de réception (2) pour un véhicule (V), comprenant
- un couvercle supérieur (3) ayant une ouverture (4),
- un couvercle (5) coulissant entre une position fermée et une position ouverte (P),
- un réceptacle (6), et
- un mécanisme mobile (7, 13) reliant le couvercle (5) et le réceptacle (6) de telle sorte que le réceptacle (6) est mobile par glissement du couvercle (5),
dans lequel,
- dans une configuration fermée, le réceptacle (6) est rétracté sous l'ouverture (4) et le couvercle (5) est dans sa position fermée couvrant l'ouverture (4) au-dessus du réceptacle (6), et dans lequel, **caractérisé en ce que**
- dans une configuration ouverte, l'ouverture (4) est découverte par le couvercle (5) étant dans sa position ouverte (P) et le réceptacle (6) est soulevé vers le couvercle supérieur (3) de telle sorte qu'il est positionné de niveau avec une surface extérieure du couvercle supérieur (3).

2. Appareil de réception (2) selon la revendication 1, dans lequel le couvercle (5) peut coulisser par-dessus sa position ouverte (P) dans une position surétirée (E) et dans lequel le mécanisme de déplacement (7, 13) est disposé de telle sorte que le réceptacle (6) n'est soulevé que lors du coulissement du couvercle (5) de la position ouverte (P) vers la position surétirée (E).

3. Appareil de réception (2) selon la revendication 2, dans lequel, après avoir atteint la position de surétirée, le couvercle (5) peut coulisser jusqu'à sa position ouverte (P) où le réceptacle (6) fournit une butée pour le couvercle.

4. Appareil de réception (2) selon la revendication 3, dans lequel
- le mécanisme de déplacement (7, 13) comprend au moins une clé coulissante (13), laquelle clé coulissante (13) comprend au moins une coupe (17) dans sa face supérieure (18) qui a une rampe (19) et qui comprend une première saillie (21),
- le réceptacle (6) comprend au moins une dent (20) s'adaptant dans une coupe respective (17) de ladite au moins une clé coulissante (13), et
- le couvercle (5) comprend une deuxième saillie (22) de telle sorte que la première saillie (21) est engagée par la deuxième saillie (22) si le couvercle (5) est positionné entre sa position ouverte (P) et sa position surétirée (E).

5. Appareil de réception (2) selon la revendication 4, comprenant un mécanisme de verrouillage pour verrouiller ladite au moins une clé coulissante (13) lorsque le réceptacle (6) a été soulevé de niveau avec la surface extérieure du couvercle supérieur (3).

6. Appareil de réception (2) selon la revendication 5, dans lequel l'appareil de réception (2) comprend au moins l'un des ressorts suivants :
- au moins un premier ressort (23) pour pousser ou tirer le couvercle (5) dans la direction de la position fermée;
- au moins un deuxième ressort pour pousser ou tirer le réceptacle (6) vers le bas; et
- au moins un troisième ressort pour pousser ou tirer ladite au moins une clé coulissante (13) dans le sens de sa position de fermeture.

7. Appareil de réception (2) selon l'une quelconque des revendications 5 à 6, dans lequel l'appareil de réception (2) comprend un mécanisme de déclenchement qui, s'il est activé dans la configuration ouverte, provoque le déclenchement du mécanisme de verrouillage, le réceptacle (6) se déplace vers le bas et le couvercle (5) se déplace dans sa position de fermeture.

8. Appareil de réception (2) selon l'une quelconque des revendications précédentes, dans lequel le couvercle (5) est de niveau avec la surface extérieure du couvercle supérieur (3).

9. Appareil de réception (2) selon l'une quelconque des revendications précédentes, dans lequel le couvercle (5), ladite au moins une clé coulissante (13) et le réceptacle (6) sont maintenus par un boîtier commun (7) .

10. Appareil de réception (2) selon l'une quelconque des revendications précédentes, dans lequel l'appareil de réception (2) fait partie d'une console centrale d'un véhicule.

11. Appareil de réception (2) selon l'une quelconque des revendications précédentes, dans lequel le réceptacle (6) est un porte-gobelet ou un cendrier.

12. Procédé pour fournir un réceptacle (6) qui est relié par un mécanisme mobile (7, 13) avec un couvercle (5) qui peut coulisser entre une position fermée et une position ouverte (P), de sorte que le réceptacle (6) peut être déplacé par coulissement du couvercle (5), dans lequel, dans une configuration fermée, le réceptacle (6) est rétracté au-dessous d'une ouverture (4) et le couvercle (5) est dans sa position fermée couvrant l'ouverture (4) au-dessus du réceptacle (6), dans lequel le procédé est **caractérisé par** les étapes suivantes :
- faire glisser un couvercle (5) d'une position fermée dans laquelle il recouvre une ouverture (4) d'un couvercle supérieur (3) à une position ouverte (P) dans laquelle le couvercle (5) expose un réceptacle (6) positionné en dessous de l'ouverture,
- faire glisser le couvercle (5) sur la position ouverte (P) jusqu'à une position déployée (E) tandis que le réceptacle (6) est soulevé dans l'ouverture (4) de telle sorte qu'il est positionné de niveau avec une surface extérieure du couvercle supérieur (3), et
- faire glisser le couvercle (5) jusqu'à la position ouverte (P) où le réceptacle (6) sert de butée pour le couvercle (5).

13. Procédé selon la revendication 12, dans lequel, lors de l'activation d'un mécanisme de déclenchement, la clé coulissante (13) est libérée, le réceptacle (6) est déplacé vers le bas et le couvercle (5) est déplacé dans sa position de fermeture.
